# EUROPEAN PATENT APPLICATION

(11) **EP 1 914 430 A1**
(43) Date of publication of application: **23.04.2008**
(21) Application number: 05767197.6
(22) Date of filing: 29.07.2005
(51) Int. Cl.: F16B 39/284, B62D 3/12, F16H 55/28

(54) **METHOD AND STRUCTURE FOR PREVENTING SCREW FROM LOOSENING AND METHOD OF MANUFACTURING MALE SCREW**

(71) Applicant: JTEKT Corporation, Osaka-shi Osaka 542-8502 (JP)
(72) Inventor: HIROSE, Masahiko c/o JTEKT Corporation, Osaka-shi, Osaka 5428502 (JP); HASHIMOTO, Masaaki c/o JTEKT Corporation, Osaka-shi, Osaka 5428502 (JP); NISHIMURA, Katsutoshi c/o JTEKT Corporation, Osaka-shi, Osaka 5428502 (JP); MITSUDA, Katsuaki c/o JTEKT Corporation, Osaka-shi, Osaka 5428502 (JP)
(74) Representative: Hering, Hartmut
(86) International application number: PCT/JP2005/013968
(87) International publication number: WO 2007/013173

(57) **Abstract**

Prior to engaging a male screw (18A) formed on the outer circumference of a second member (18) with a female screw (15A) formed on the inner circumference of a hole (15) in a first member (5), protruding parts (40) which protrude outward in the radial direction and are positioned at one end side of the male screw (18A) in the axial direction are formed in a plurality of regions which are separated from each other in the circumferential direction on the outer circumference of the second member (18) on which the male screw (18A) is formed. The male screw (18A) is then engaged with the female screw (15A) from the other end side of the male screw (18A) in the axial direction. The torque required to rotate the male screw (18A) engaged with the female screw (15A) in the loosening direction is set so as to be greater in a state where the protruding parts are interposed between the male screw (18A) and the female screw (15A) than in a state where the protruding parts are not so interposed.

## Description

### TECHNICAL FIELD

The present invention relates to a method and structure for preventing the loosening of a male screw which is engaged with a female screw, and a method for manufacturing this male screw.

### BACKGROUND ART

In a rack and pinion type steering apparatus equipped with a rack mating with a pinion which is rotated by steering operation, a female screw is formed on the inner circumference of a hole formed in a housing which covers the rack, the opening of the hole is closed by engaging a male screw formed on the outer circumference of a closing member with the female screw, and an elastic member which presses a rack supporting member inserted into the hole against the rack is sandwiched between the rack supporting member and the closing member. The gap between the rack supporting member and the closing member is adjusted by adjusting the amount by which the male screw is engaged with the female screw, so that fluctuation in the amount of mating between the rack and the pinion caused by bending of the rack and others is prevented, thus making it possible to achieve smoother mating.

Conventionally, in order to prevent loosening of the male screw formed on the abovementioned closing member, a lock nut is engaged with this male screw (Patent Document 1).
Patent Document 1: Japanese Patent Application Laid-open No. 1979-138239

### DISCLOSURE OF THE INVENTION

### PROBLEMS TO BE SOLVED BY THE INVENTION

In the prior art, since the lock nut is necessary, the number of parts is increased. Furthermore, the male screw rotates with respect to the female screw when the lock nut is engaged, so that the gap between the rack supporting member and closing member fluctuates. As a result, since it is necessary to readjust this gap, the productivity drops. Furthermore, since a temporary assembly process in which the lock nut is provisionally engaged with the male screw is required prior to the process in which the male screw is engaged with the female screw, the working efficiency is poor. It is an object of the present invention to provide a method and structure for preventing screw loosening and a method for manufacturing a male screw that can solve such problems.

### MEANS FOR SOLVING THE PROBLEMS

In the method of the present invention for preventing screw loosening, prior to engaging a male screw formed on the outer circumference of a second member with a female screw formed on the inner circumference of a hole in a first member, protruding parts which protrude outward in the radial direction and are positioned at one end side of the male screw in the axial direction are formed in a plurality of regions which are separated from each other in the circumferential direction on the outer circumference of the second member on which the male screw is formed, the male screw is then engaged with the female screw from the other end side of the male screw in the axial direction, and the torque required to rotate the male screw engaged with the female screw in the loosening direction is set so as to be greater in a state where the protruding parts are interposed between the male screw and the female screw than in a state where the protruding parts are not interposed between the male screw and the female screw.
The structure of the present invention for preventing screw loosening comprises a first member which has a hole, a female screw which is formed on the inner circumference of the hole, a second member which has an outer circumference, a male screw which is formed on the outer circumference of the second member, and a recessed part which is formed in the second member so as to be positioned to the inside of the male screw in the radial direction, wherein plastic deformation parts which are plastically deformed outward in the radial direction are formed in a plurality of regions which are separated from each other in the circumferential direction on the inner circumference of the recessed part, protruding parts which are protruded outward in the radial direction by the formation of the plastic deformation parts are formed in a plurality of regions which are separated from each other in the circumferential direction on the outer circumference of the second member on which the male screw is formed, the protruding parts are positioned at one end side of the male screw in the axial direction, and the torque required to rotate the male screw engaged with the female screw in the loosening direction is set so as to be greater in a state where the protruding parts are interposed between the male screw and the female screw than in a state where the protruding parts are not interposed between the male screw and the female screw.
According to the method of the present invention, no protruding parts are interposed between the male screw and the female screw in the initial stage of the operation for engaging the male screw with the female screw, so that this operation can be easily initiated. Since protruding parts are subsequently interposed between the male screw and the female screw, the friction between the male screw and the female screw can be increased so that loosening of the male screw with respect to the female screw is restricted. Furthermore, since loosening of the male screw with respect to the female screw can be restricted without using a lock nut, the number of parts can be reduced, so that the productivity and working efficiency can be improved. In addition, the male screw can be loosened with respect to the female screw if necessary by applying torque exceeding the set value on the male screw. Inadvertent loosening of the male screw with respect to the female screw can be prevented by controlling the torque required to loosen the male screw with respect to the female screw. The method of the present invention can be realized using the structure of the present invention.

It is desirable that the torque required to rotate the male screw engaged with the female screw in the loosening direction is set so as to be equal to or greater than 10 Newton-meter in a state where the protruding parts are interposed between the male screw and the female screw, and is set so as to be equal to or less than 1 Newton-meter in a state where the protruding parts are not interposed between the male screw and the female screw. As a result, the male screw can be easily engaged with the female screw, and inadvertent loosening of the male screw with respect to the female screw can be securely prevented.

It is desirable that the second member is pressed against a pressure receiving part which is to be fixed to the first member, at the other end of the male screw engaged with the female screw via the protruding parts, and that the torque required to rotate the male screw engaged with the female screw in the loosening direction is set so as to be equal to or greater than 3 Newton-meter in a state where the protruding parts are interposed between the male screw and the female screw, and is set so as to be equal to or less than 1 Newton-meter in a state where the protruding parts are not interposed between the male screw and the female screw. As a result, the male screw can be easily engaged with the female screw, and the friction between the male screw and the female screw can be increased by the reaction force that acts on the other end of the male screw, so that inadvertent loosening of the male screw with respect to the female screw can be securely prevented.

It is desirable that the first member is constituted by a housing which covers a rack mating with a pinion, which is caused to rotate by steering operation, that an elastic member is provided so as to apply elastic force for pressing a rack supporting member inserted into the hole against the rack, that the second member is constituted by a closing member which closes the opening of the hole, and that the elastic member is sandwiched between the rack supporting member and the closing member. As a result, the present invention can be applied to a rack and pinion type steering apparatus, the male screw can be loosened with respect to the female screw if necessary by applying torque which exceeds a set torque on the male screw, and the adjustment of the gap between the rack supporting member and the closing member can be performed with good efficiency.

In the method of the present invention for manufacturing the male screw in the structure for preventing screw loosening, three pressing parts are integrally disposed so as to be inclined with respect to the axis of the male screw and separated from each other in the circumferential direction of the male screw with facing the circumferential edge of the opening of the recessed part, these three pressing parts as an integral unit are then moved integrally in the axial direction of the male screw relatively to the second member, and the plastic deformation parts are formed by pressing the respective pressing parts against the circumferential edge of the opening of the recessed part. In the present invention, since the number of pressing parts which are pressed against the circumferential edge of the opening in the second member is three, the respective pressing parts can be uniformly pressed against the circumferential edge of the opening of the recessed part. As a result, the amounts of plastic deformation in the respective plastic deformation parts can be made uniform, so that the amounts of protrusion of the respective protruding parts can be made uniform; therefore, the torque required to loosen the male screw can be accurately set, so that inadvertent loosening of the male screw with respect to the female screw can be securely prevented.

### EFFECT OF THE INVENTION

The present invention makes it possible to provide a method and structure for preventing screw loosening in which the number of parts can be reduced, the productivity can be improved, and the working efficiency can be improved.

### BRIEF DESCRIPTION OF THE DRAWINGS

[Fig. 1] A longitudinal sectional view of an essential part of a rack and
pinion type steering apparatus in an embodiment of the present invention
[Fig. 2] A partially sectional front view of an essential part of the rack and pinion type steering apparatus in the embodiment of the present invention
[Fig. 3] A front view of the closing member in the embodiment of the present invention
[Fig. 4A] A plan view of the pressing part in the embodiment of the present invention
[Fig. 4B] A side view of the pressing part in the embodiment of the present invention
[Fig. 5A] A diagram showing the state prior to the formation of the plastic deformation parts by the pressing parts in the embodiment of the present invention
[Fig. 5B] A diagram showing the state following the formation of the plastic deformation parts by the pressing parts in the embodiment of the present invention
[Fig. 6A] A diagram showing the initial state of the operation for engaging the male screw with the female screw in the embodiment of the present invention
[Fig. 6B] A diagram showing the state after the male screw is engaged with the female screw in the embodiment of the present invention
[Fig. 7] A longitudinal sectional view of an essential part of a rack and pinion type steering apparatus in a modification of the present invention

### EXPLANATION OF REFERENCE NUMERALS

3 pinion
4 rack
5 housing (first member)
15, 5' hole
15A, 5A male screw
16 rack supporting member
18 closing member (second member)
18A, 70A male screw
18a, 70a recessed part
18a' circumferential edge
20 elastic member
30, 80 plastic deformation parts
40, 90 protruding parts
52a pressing parts
70 annular member (second member)

### BEST MODE FOR CARRYING OUT THE INVENTION

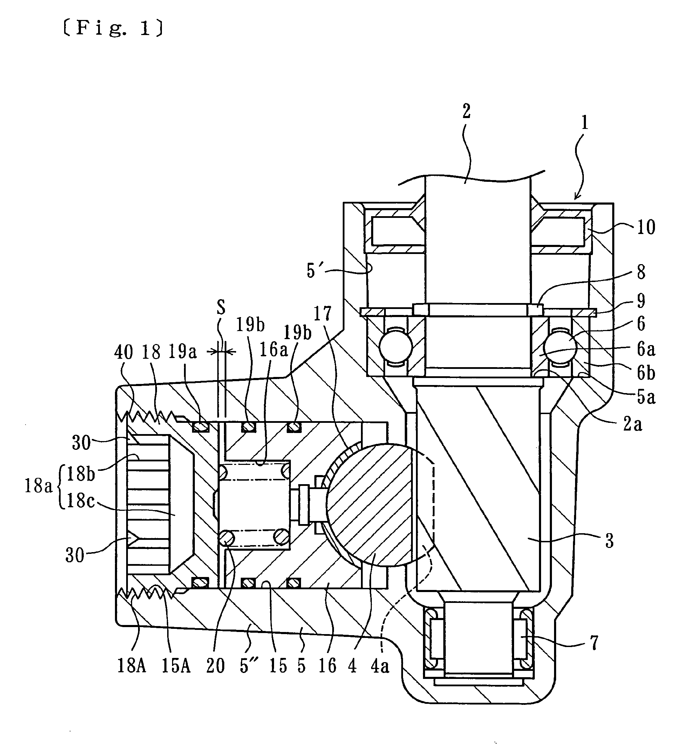

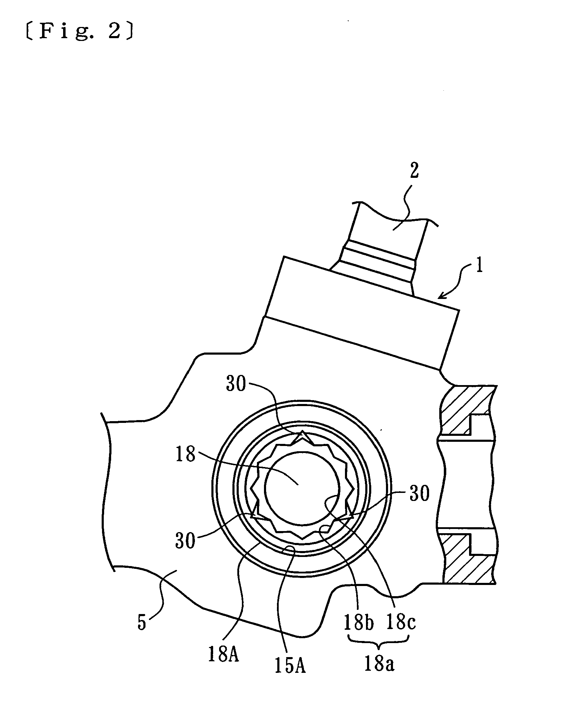

The rack and pinion type steering apparatus 1 shown in Figs. 1 and 2 comprises an input shaft 2 which is connected to the steering wheel (not shown in the figures), a helical pinion 3 which is formed on the outer circumference of the input shaft 2, a helical rack 4 which mates with the pinion 3 via teeth 4a, and a housing 5 which covers the pinion 3 and rack 4. The first member of the present invention is constituted by the housing 5. The housing 5 supports the input shaft 2 via a ball bearing 6 and a needle bearing 7. The inner race 6a of the bearing 6 is sandwiched by a step 2a of the input shaft 2 and a ring 8 attached to the input shaft 2, and the outer race 6b is sandwiched by a step 5a inside a shaft retaining hole 5' formed in the housing 5 and a snap ring 9 attached to the housing 5. A seal 10 is disposed between the input shaft 2 and the housing 5. The rack 4 is moved in the lateral direction of the vehicle by the rotation of the pinion 3 caused by steering operation, so that the steering angle of the wheels connected to both ends of the rack 4 via link mechanisms (not shown in the figures) varies.

The housing 5 has a retaining part 5" extending from the position at which the pinion 3 mates with the rack 4 to a direction perpendicular to the longitudinal direction of the rack 4. A hole 15 is formed in the retaining part 5". A rack supporting member 16 is inserted into the hole 15 so as to be capable of reciprocating in a direction perpendicular to the longitudinal direction of the rack 4. The opening of the hole 15 is closed by a closing member 18. The second member of the present invention is constituted by the closing member 18. A male screw 18A is formed on the outer circumference of the closing member 18, and the male screw 18A is engaged with a female screw 15A formed on the inner circumference of the hole 15, so that the opening of the hole 15 is closed by the closing member 18. A recessed part 18a is formed in one end of the closing member 18 so as to be positioned to the inside of the male screw 18A in the radial direction, so that the closing member 18 has the shape of a tube having a bottom. The opening side of the inner circumference of the recessed part 18a is formed as a tool engaging part 18b conforming to the shape of a polygonal column, the bottom side 18c of the recessed part 18a is formed with a shape conforming to a circular conical surface. The male screw 18A can be engaged with the female screw 15A or loosened with respect to the female screw 15A by inserting a tool (not shown in the figures) such as a wrench or the like which has an outer circumference conforming to the tool engaging part 18b, and rotating the closing member 18. Furthermore, a sealing ring 19a is disposed between the closing member 18 and the housing 5.

One end of the rack supporting member 16 faces the other end of the closing member 18. The other end of the rack supporting member 16 supports the back surface of the rack 4 via a sheet 17. An elastic member 20 constituted by a compression coil spring is inserted into a hole 16a formed in one end of the rack supporting member 16. The elastic member 20 is compressed by being sandwiched between the rack supporting member 16 and the closing member 18, so that elastic force is applied so as to press the rack supporting member 16 against the rack 4. As a result, smooth engagement between the rack 4 and the pinion 3 is ensured by the movement of the rack supporting member 16. The amount of movement of the rack supporting member 16 due to the bending of the rack 4 and others is corrected by the adjustment of the gap S between one end of the rack supporting member 16 and the other end of the closing member 18, so that the engagement between the rack 4 and pinion 3 is ensured. This adjustment of the gap S is performed by adjusting the amount by which the male screw 18A is engaged with the female screw 15A. Furthermore, a sealing ring 19b is disposed between the rack supporting member 16 and the housing 5.

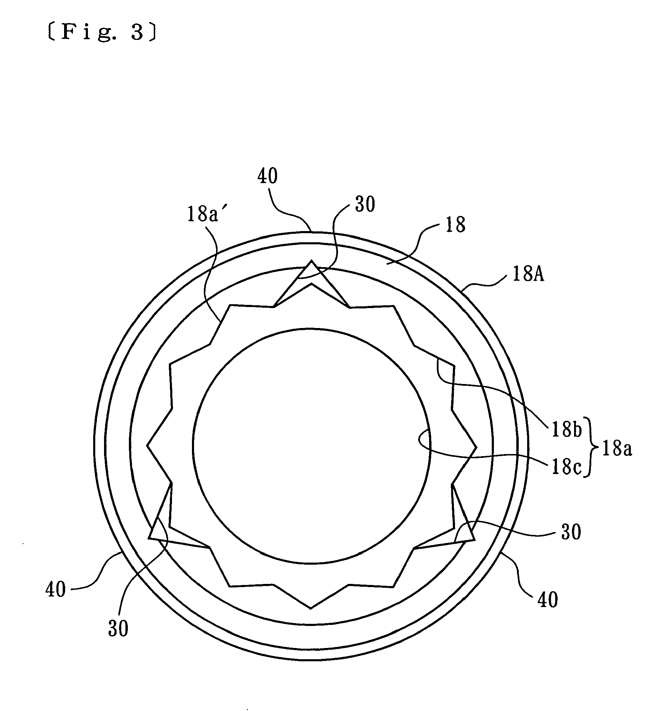

As is shown in Fig. 3, plastic deformation parts 30 which are plastically deformed outward in the radial direction are formed in a plurality of regions (three regions in the present embodiment) which are separated from each other in the circumferential direction on the inner circumference of the recessed part 18a of the closing member 18. Each of the plastic deformation parts 30 is formed by plastically deforming a portion of the circumferential edge 18a' of the opening of the recessed part 18a. Protruding parts 40 which are protruded outward in the radial direction by the formation of the plastic deformation parts 30 are formed in a plurality of regions (three regions in the present embodiment) which are separated from each other in the circumferential direction on the outer circumference of the closing member 18 on which the male screw 18A is formed. The respective protruding parts 40 are positioned at one end side of the male screw 18A in the axial direction (toward the outside of the housing 5), and the male screw 18A is engaged with the female screw 15A from the other end side of the male screw 18A in the axial direction. As a result, the torque required to rotate the male screw 18A engaged with the female screw 15A in the loosening direction is set so as to be greater in a sate where the protruding parts 40 are interposed between the male screw 18A and the female screw 15A than in a state where these protruding parts 40 are not so interposed. Here, since the amount of protrusion of the protruding parts 40 is so small (e. g., 0.1 mm or less) that this amount of protrusion is difficult to distinguish with the naked eye, the outer circumference of the male screw 18A is shown as conforming to a circle in the figures.

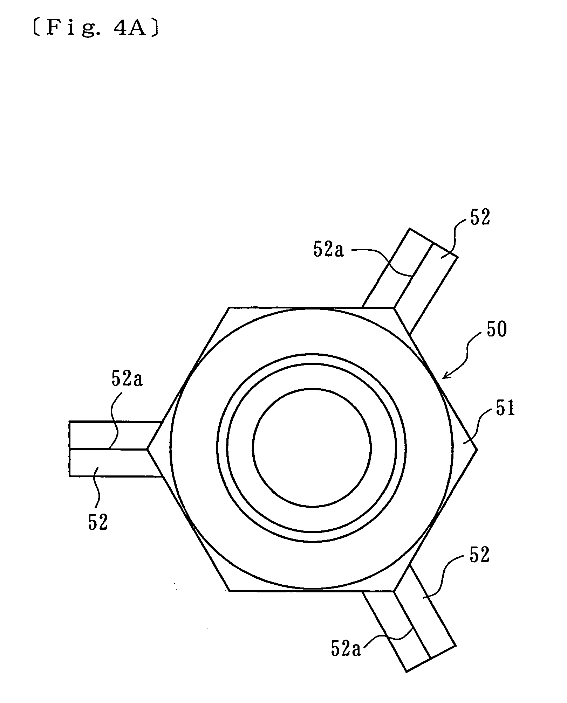

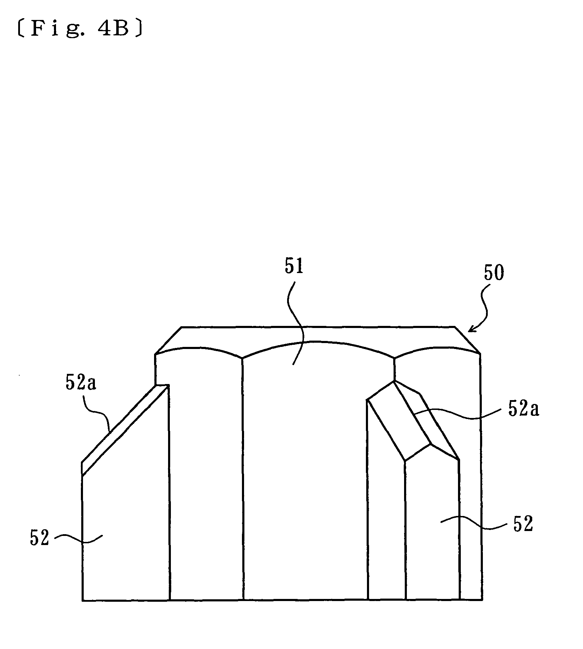

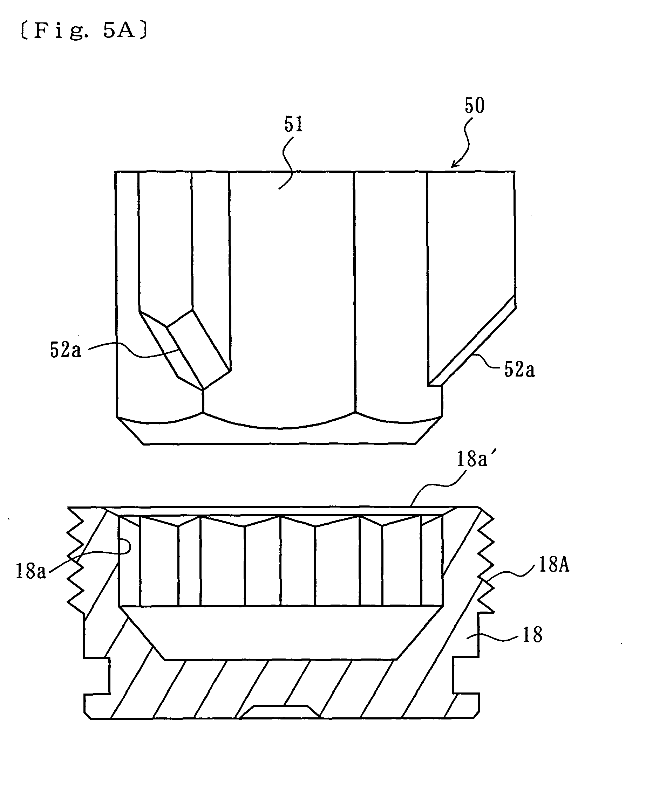

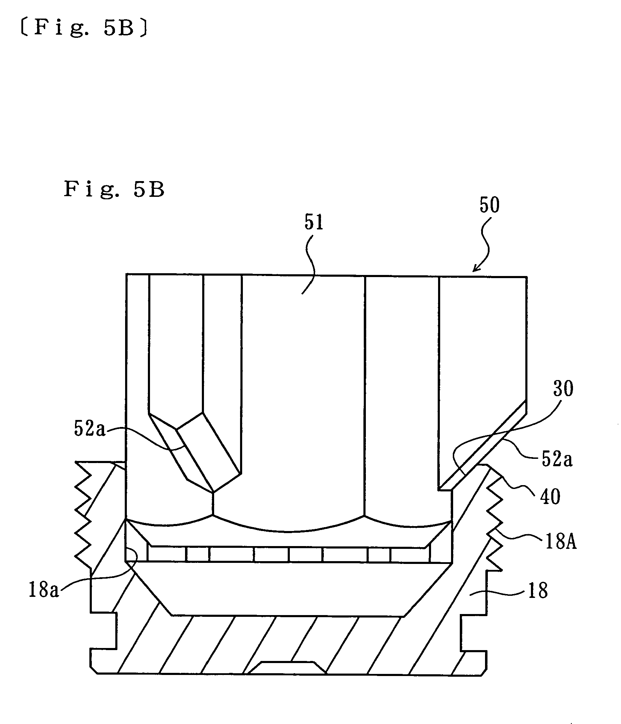

In the present embodiment, the male screw 18A is formed by, for example, rolling, and then the plastic deformation parts 30 are formed by the pressing tool 50 shown in Figs. 4A and 4B. The pressing tool 50 has a main body 51 in the shape of a hexagonal nut, and three blades 52 protruding from the outer circumference of the main body 51. The respective blades 52 have the same configuration, and are disposed at equal intervals in the circumferential direction of the main body 51. A pressing part 52a in the shape of an edge is formed on one end of each blade 52. Each of the pressing parts 52a is inclined with respect to the axial direction of the main body 51 (the vertical direction in Fig. 4B) so as to tend from one end to the other end of the main body 51 as it is distanced from the outer circumference of the main body 51.
For example, one of the pressing tool 50 and the closing member 18 is attached to the ram of a pressing device, and the other is fastened to a table or the like. As a result, as shown in Fig. 5A, by making the axis of the main body 51 coincide with the axis of the closing member 18, the three pressing parts 52a can be integrally disposed so as to be inclined with respect to the axis of the male screw 18A and separated from each other in the circumferential direction of the male screw 18A with facing the circumferential edge 18a' of the opening of the recessed part 18a. Subsequently, the closing member 18 and the pressing tool 50 are moved relatively in the axial direction of the male screw 18A by the pressing device, so that the three pressing parts 52a as an integral unit are moved in the axial direction of the male screw 18A relatively to the closing member 18 as shown in Fig. 5B. As a result, the respective pressing parts 52a are pressed against the circumferential edge 18a' of the opening of the recessed part 18a, so that plastic deformation parts 30 which are plastically deformed outward in the radial direction are formed in three regions which are separated from each other in the circumferential direction on the inner circumference of the recessed part 18a. As a result of the formation of the respective plastic deformation parts 30, protruding parts 40 which are protruded outward in the radial direction are formed in three regions which are separated from each other in the circumferential direction on the outer circumference of the closing member 18 on which the male screw 18A is formed.

In the present embodiment, it is desirable that the torque required to rotate the male screw 18A engaged with the female screw 15A in the loosening direction is set equal to or greater than 10 Newton-meter, preferably equal to or greater than 25 Newton-meter and equal to or less than 50 Newton-meter, in a state where the protruding parts 40 are interposed between the male screw 18A and the female screw 15A, and that this torque is set equal to or less than 1 Newton-meter in a state where the protruding parts 40 are not interposed between the male screw 18A and the female screw 15A. Since the protruding parts 40 are formed by the formation of the plastic deformation parts 30 which are formed by pressing the pressing parts 52a against the circumferential edge 18a' of the opening of the recessed part 18a in the axial direction, the protruding parts 40 can be formed, after determining the value of pressing force or the amount of pressing in the axial direction by preliminary experiment so that the torque required to rotate the male screw 18A engaged with the female screw 15A in the loosening direction becomes a set torque. It is desirable to reduce the manufacturing tolerance of the male screw 18A and the female screw 15A prior to forming the protruding parts 40 for accurately setting this set torque at a desired value. For example, the precision of the male screw 18A is set at a precision higher than 4h (ISO), and the precision of the female screw 15A is set at a precision higher than 4H (ISO). Furthermore, in the initial stage of the operation for engaging the male screw 18A with the female screw 15A, torque exceeding 50 Newton-meter, e. g., approximately 75 Newton-meter, is applied in the tightening direction, so that the rack 4 is pressed against the pinion 3 by the closing member 18 via the rack supporting member 16. In this state, the pinion 3 is rotated so that members, which contact with each other, such as the rack 4 and pinion 3, and the rack 4 and rack supporting member 16 work in with each other in a good fit condition. It is desirable that torque oriented in the loosening direction of the male screw 18A subsequently applied in order to adjust the gap S.

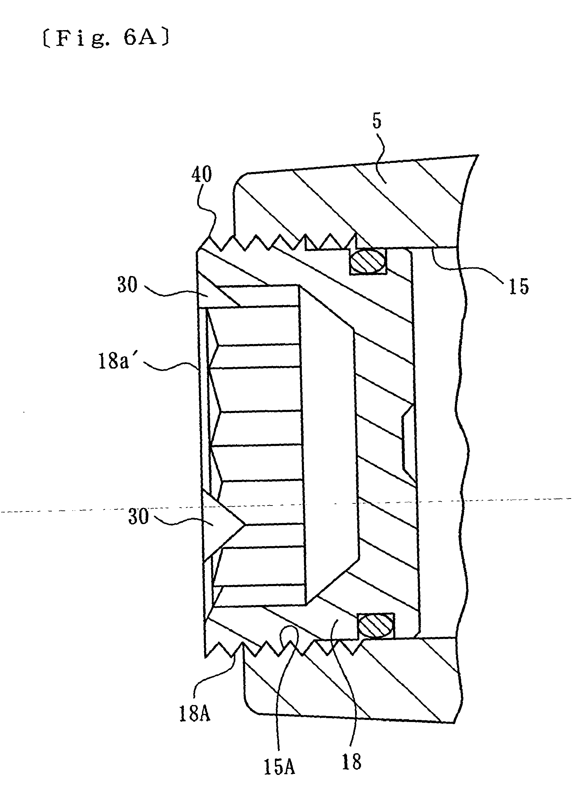

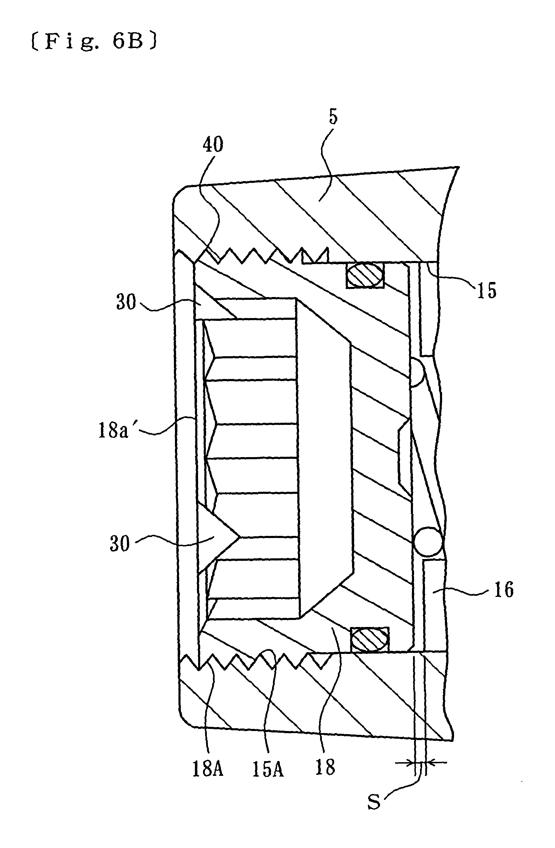

In the abovementioned construction, prior to engaging the male screw 18A with the female screw 15A, respective protruding parts 40 positioned at one end side of the male screw in the axial direction are formed on the outer circumference of the closing member 18 on which the male screw 18A is formed, and then the male screw 18A is engaged with the female screw 15A from the other end side of the male screw 18A in the axial direction. The torque required to rotate the male screw 18A engaged with the female screw 15A in the loosening direction is set so as to be greater in a state where the protruding parts 40 are interposed between the male screw 18A and female screw 15A than in a state where the protruding parts 40 are not so interposed. As a result, as shown in Fig. 6A, since the protruding parts 40 are not interposed between the male screw 18A and female screw 15A in the initial stage of the operation for engaging the male screw 18A with the female screw 15A, so that this operation can be easily initiated. Subsequently, when one end side of the male screw 18A is engaged with the female screw 15A as shown in Fig. 6B, the protruding parts 40 are interposed between the male screw 18A and the female screw 15A; therefore, the friction between the male screw 18A and the female screw 15A is increased, so that the loosening of the male screw 18A with respect to the female screw 15A is restricted. In particular, since the torque required to rotate the male screw 18A engaged with the female screw 15A in the loosening direction is set at 10 Newton-meter or greater in a state where the protruding parts 40 are interposed between the male screw 18A and the female screw 15A, and is set at 1 Newton-meter or less in a state where the protruding parts are not interposed between the male screw 18A and female screw 15A, the engaging of the male screw 18A with the female screw 15A can be easily performed, and the inadvertent loosening of the male screw 18A with respect to the female screw 15A can be securely prevented. Furthermore, since the loosening of the male screw 18A with respect to the female screw 15A can be restricted without using a lock nut, the number of parts can be reduced, the productivity can be improved, and the working efficiency can be improved. Furthermore, the male screw 18A can be loosened with respect to the female screw 15A if necessary by applying torque exceeding the set value. Accordingly, the efficiency of the adjustment operation of the gap S between the rack supporting member 16 and the closing member 18 can be improved. By controlling the torque to loosen the male screw 18A with respect to the female screw 15A, it is possible to prevent inadvertent loosening of the male screw 18A with respect to the female screw 15A. Furthermore, when the plastic deformation parts 30 are formed by means of the pressing tool 50, since the number of pressing parts 52a pressed against the circumferential edge 18a' of the opening of the recessed part 18a is three, the respective pressing parts 52a can be uniformly pressed against the circumferential edge 18a' of the opening of the recessed part 18a. As a result, the amount of plastic deformation in the respective plastic deformation parts 30 can be made uniform, so that the amount of protrusion of the respective protruding parts 40 can be made uniform; therefore, the torque required to loosen the closing member 18 can be accurately set, so that inadvertent loosening of the male screw 18A with respect to the female screw 15A can be securely prevented.

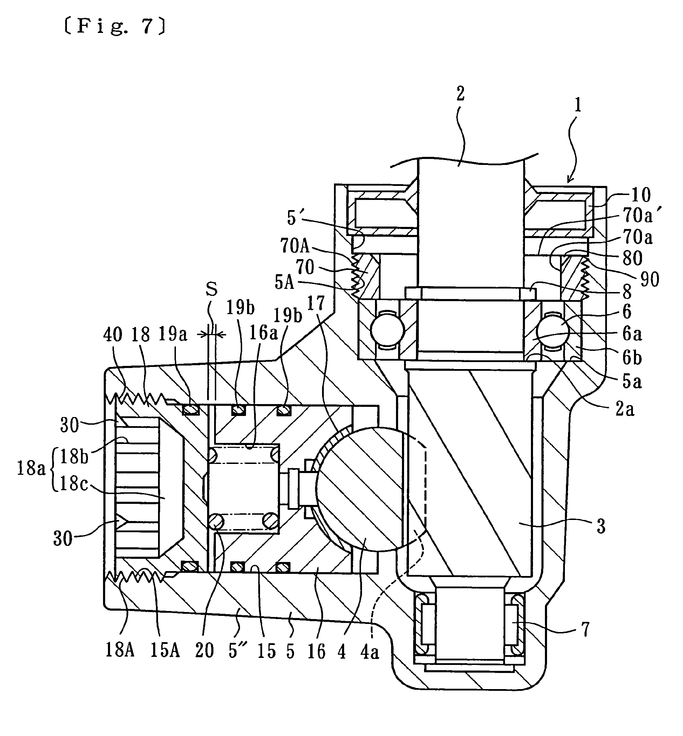

Instead of the snap ring 9 for fastening the outer race 6b in the abovementioned embodiment, an annular member 70 illustrated in Fig. 7 can be used as the second member of the present invention. Specifically, a male screw 70A engaged with a female screw 5A formed on the inner circumference of the shaft retaining hole 5' of the housing 5 is formed on the outer circumference of the annular member 70. The hole defined by the inner circumference of the annular member 70 serves as the recessed part 70a of the present invention. Plastic deformation parts 80 plastically deformed outward in the radial direction are formed in three regions of the circumferential edge 70a' of the opening of the recessed part 70 in the same manner as in the abovementioned embodiment. As a result, at one end side of the male screw 70A in the axial direction, protruding parts 90 which protrude outward in the radial direction are formed on the outer circumference of the annular member 70 on which the male screw 70A is formed, in the same manner as in the abovementioned embodiment. The annular member 70 is pressed against the outer race 6b (pressure receiving part) which is to be fixed to the housing 5, at the other end of the male screw 70A engaged with the female screw 5A via the protruding parts. In this case, it is desirable that the torque required to rotate the male screw 70A engaged with the female screw 5A is set so as to be equal to or greater than 3 Newton-meter in a state where the protruding parts 90 are interposed between the male screw 70A and the female screw 5A, and that it is set so as to be equal to or less than 1 Newton-meter in a state where the protruding parts 90 are not interposed between the male screw 70A and the female screw 5A. As a result, the engaging of the male screw 70A with the female screw 5A can be easily performed, and since the friction between the male screw 70A and the female screw 5A can be increased by the reaction force which acts on the other end of the male screw 70A from the outer race 6b, the inadvertent loosening of the male screw 70A with respect to the female screw 5A can be securely prevented. The remaining construction is the same as in the abovementioned embodiment.

The present invention is not limited to the abovementioned embodiments. For example, the present invention is not limited to application to rack and pinion type steering apparatuses, but can be applied to any structure in which a male screw formed on the outer circumference of a second member is engaged with a female screw formed on the inner circumference of a hole in a first member.

## Claims

1. A method for preventing screw loosening, wherein prior to engaging a male screw formed on the outer circumference of a second member with a female screw formed on the inner circumference of a hole in a first member, protruding parts which protrude outward in the radial direction and are positioned at one end side of said male screw in the axial direction are formed in a plurality of regions which are separated from each other in the circumferential direction on the outer circumference of said second member on which said male screw is formed,
said male screw is then engaged with said female screw from the other end side of said male screw in the axial direction, and
torque required to rotate said male screw engaged with said female screw in the loosening direction is set so as to be greater in a state where said protruding parts are interposed between said male screw and said female screw than in a state where said protruding parts are not interposed between said male screw and said female screw.

2. A structure for preventing screw loosening comprising:
a first member which has a hole;
a female screw which is formed on the inner circumference of said hole;
a second member which has an outer circumference;
a male screw which is formed on the outer circumference of said second member; and
a recessed part which is formed in said second member so as to be positioned to the inside of said male screw in the radial direction, wherein
plastic deformation parts which are plastically deformed outward in the radial direction are formed in a plurality of regions which are separated from each other in the circumferential direction on the inner circumference of said recessed part,
protruding parts which are protruded outward in the radial direction by the formation of said plastic deformation parts are formed in a plurality of regions which are separated from each other in the circumferential direction on the outer circumference of said second member on which said male screw is formed,
said protruding parts are positioned at one end side of said male screw in the axial direction, and
torque required to rotate said male screw engaged with said female screw
in the loosening direction is set so as to be greater in a state where said
protruding parts are interposed between said male screw and said female
screw than in a state where said protruding parts are not interposed
between said male screw and said female screw.

3. The structure for preventing screw loosening according to claim 2, wherein the torque required to rotate said male screw engaged with said female screw in the loosening direction is set so as to be equal to or greater than 10 Newton-meter in a state where said protruding parts are interposed between said male screw and said female screw, and is set so as to be equal to or less than 1 Newton-meter in a state where said protruding parts are not interposed between said male screw and said female screw.

4. The structure for preventing screw loosening according to claim 2, wherein said second member is pressed against a pressure receiving part which is to be fixed to said first member, at the other end of said male screw engaged with said female screw via said protruding parts, and
the torque required to rotate said male screw engaged with said female screw in the loosening direction is set so as to be equal to or greater than 3 Newton-meter in a state where said protruding parts are interposed between said male screw and said female screw, and is set so as to be equal to or less than 1 Newton-meter in a state where said protruding parts are not interposed between said male screw and said female screw.

5. The structure for preventing screw loosening according to any of claims 2 through 4, wherein
said first member is constituted by a housing which covers a rack mating with a pinion, which is caused to rotate by steering operation,
an elastic member is provided so as to apply elastic force for pressing a rack supporting member inserted into said hole against said rack,
said second member is constituted by a closing member which closes the opening of said hole, and
said elastic member is sandwiched between said rack supporting member and said closing member.

6. A method for manufacturing a male screw in the structure for preventing screw loosening according to any of claims 2 through 5, wherein
three pressing parts are integrally disposed so as to be inclined with respect to the axis of the male screw and separated from each other in the circumferential direction of the male screw with facing the circumferential edge of the opening of the recessed part,
said three pressing parts as an integral unit are then moved in the axial direction of said male screw relatively to said second member, and
said plastic deformation parts are formed by pressing the respective pressing parts against the circumferential edge of the opening of said recessed part.
